# EUROPEAN PATENT APPLICATION

(11) **EP 4 686 036 A1**
(43) Date of publication of application: **28.01.2026**
(21) Application number: 24215108.2
(22) Date of filing: 25.11.2024
(51) Int. Cl.: H02J 3/38, H02M 1/00, H02M 7/5387, H02J 3/46

(54) **INVERTER, GRID-CONNECTED CONTROL METHOD, PHOTOVOLTAIC SYSTEM, APPARATUS AND MEDIUM**

(30) Priority: 23.07.2024 CN 202410994744
(71) Applicant: Sungrow Power Supply Co., Ltd., Hefei, Anhui 230088 (CN)
(72) Inventor: GE, Kang, Hefei, Anhui, 230088 (CN); LIANG, Cheng, Hefei, Anhui, 230088 (CN); PAN, Nian an, Hefei, Anhui, 230088 (CN); YAO, Pei, Hefei, Anhui, 230088 (CN); LI, He, Hefei, Anhui, 230088 (CN); FENG, Jigui, Hefei, Anhui, 230088 (CN)
(74) Representative: Zacco Norway AS

(57) **Abstract**

An inverter, a grid-connected control method, a photovoltaic system, an apparatus, and a medium are provided. The inverter includes: a power conversion circuit and a controller. The controller is configured to, in a case that the inverter operates in a standby state, control the inverter to operate in an off-grid state when a direct-current voltage of the inverter is greater than a voltage threshold, and adjust an off-grid operation parameter of the power conversion circuit in the inverter or an operation parameter of a temperature regulation system in an inverter cabinet. The controller is configured to, when the inverter meets at least one predetermined condition, control the inverter to operate in a grid-connected state. The predetermined condition includes: the direct-current voltage, an alternative-current voltage, an alternative-current current, a direct-current current, a direct-current side power or an alternative-current side power of the inverter being greater than a corresponding threshold. With the solutions in the present disclosure, the inverter is prevented from switching back and forth between the standby state and the grid-connected state multiple times, reducing power consumption and extending service lives of electrical components.

## Description

### FIELD

The present disclosure relates to the technical field of power electronics, and in particular to an inverter, a grid-connected control method, a photovoltaic system, an apparatus, and a medium.

### BACKGROUND

In a situation in which photovoltaic panels generate low energy and the inverter switches from a standby state to a grid-connected state, due to that the inverter just operates in the grid-connected state and the energy generated by the photovoltaic panels is low, the inverter may return from the grid-connected state to the standby state and then switch to the grid-connected state from the standby state. In the above "hiccup" situation, the inverter switches back and forth between the standby state and the grid-connected state multiple times, increasing power consumption and shortening service lives of some electrical components.

### SUMMARY

In view of this, an inverter, a grid-connected control method, a photovoltaic system, an apparatus, and a medium are provided according to the present disclosure, avoiding the inverter from switching back and forth between the standby state and the grid-connected state multiple times, reducing power consumption, and extending service lives of electrical components.

According to the present disclosure, an inverter is provided. The inverter includes: a power conversion circuit and a controller. The controller is configured to, in a case that the inverter operates in a standby state, control the inverter to operate in an off-grid state when a direct-current voltage of the inverter is greater than a voltage threshold, and adjust an off-grid operation parameter of the power conversion circuit in the inverter or an operation parameter of a temperature regulation system in an inverter cabinet. The controller is configured to, when the inverter meets at least one predetermined condition, control the inverter to operate in a grid-connected state. The predetermined condition includes: the direct-current voltage, an alternative-current voltage, an alternative-current current, a direct-current current, a direct-current side power or an alternative-current side power of the inverter being greater than a corresponding threshold.

In an embodiment, the controller is configured to, in a case that the inverter operates in the off-grid state, control the inverter to operate in the grid-connected state when the direct-current voltage of the inverter is greater than the voltage threshold and the direct-current side power of the inverter is greater than a power threshold.

In an embodiment, the controller is configured to, in the case that the inverter operates in the off-grid state, control the inverter to operate in the grid-connected state when the direct-current voltage of the inverter is greater than the voltage threshold and the direct-current side power of the inverter is greater than the power threshold for more than a time threshold.

In an embodiment, the controller is further configured to, in a case that the inverter operates in the grid-connected state, control the inverter to operate in the standby state when the direct-current side power, the alternative-current side power, the direct-current voltage, the direct-current current or the alternative-current current of the inverter is less than a corresponding threshold for more than a time threshold.

In an embodiment, the controller is configured to adjust the off-grid operation parameter of the power conversion circuit in the inverter by increasing a direct-current voltage of the power conversion circuit.

In an embodiment, the controller is configured to adjust the off-grid operation parameter of the power conversion circuit in the inverter by increasing an amplitude of an alternative-current voltage of the power conversion circuit.

In an embodiment, the controller is configured to adjust the off-grid operation parameter of the power conversion circuit in the inverter by increasing a frequency of a switching transistor of the power conversion circuit.

In an embodiment, the controller is configured to adjust the off-grid operation parameter of the power conversion circuit in the inverter by increasing an operation power of the temperature regulation system in the inverter cabinet.

In an embodiment, the controller is configured to adjust the off-grid operation parameter of the power conversion circuit in the inverter by adjusting a frequency of an alternative-current voltage of the power conversion circuit in a case that the inverter includes a filter circuit.

In an embodiment, the controller is configured to: in a case that the filter circuit of the inverter is an L-type filter circuit, reduce the frequency of the alternative-current voltage of the power conversion circuit; in a case that the filter circuit of the inverter is an LC-type filter circuit, adjust the frequency of the alternative-current voltage of the power conversion circuit to reduce a difference between the frequency of the alternative-current voltage of the power conversion circuit and a resonant frequency of the LC-type filter circuit; and in a case that the filter circuit of the inverter is a C-type filter circuit, increase the frequency of the alternative-current voltage of the power conversion circuit.

According to the present disclosure, a grid-connected control method for an inverter is provided. The method includes: detecting a direct-current voltage of the inverter in a case that the inverter operates in a standby state; controlling the inverter to operate in an off-grid state, and adjusting an off-grid operation parameter of a power conversion circuit in the inverter or an operation parameter of a temperature regulation system in an inverter cabinet, when the direct-current voltage of the inverter is greater than a voltage threshold; and controlling the inverter to operate in a grid-connected state when the inverter meets at least one predetermined condition. The predetermined condition includes: the direct-current voltage, an alternative-current voltage, an alternative-current current, a direct-current current, a direct-current side power or an alternative-current side power of the inverter being greater than a corresponding threshold.

In an embodiment, the controlling the inverter to operate in a grid-connected state when the direct-current voltage of the inverter is greater than the voltage threshold includes: controlling, in a case that the inverter operates in the off-grid state, the inverter to operate in the grid-connected state when the direct-current voltage of the inverter is greater than the voltage threshold and the direct-current side power of the inverter is greater than a power threshold.

In an embodiment, the method further includes: controlling, in a case that the inverter operates in the grid-connected state, the inverter to operate in the standby state when the direct-current side power, the alternative-current side power, the direct-current voltage, the direct-current current or the alternative-current current of the inverter is less than a corresponding threshold for more than a time threshold.

In an embodiment, the adjusting an off-grid operation parameter of a power conversion circuit includes: increasing a direct-current voltage of the power conversion circuit.

In an embodiment, the adjusting an off-grid operation parameter of a power conversion circuit includes: increasing an amplitude of an alternative-current voltage of the power conversion circuit.

In an embodiment, the adjusting an off-grid operation parameter of a power conversion circuit includes: increasing a frequency of a switching transistor of the power conversion circuit.

In an embodiment, the adjusting an off-grid operation parameter of a power conversion circuit includes: adjusting a frequency of an alternative-current voltage of the power conversion circuit in a case that the inverter includes a filter circuit.

In an embodiment, the adjusting an off-grid operation parameter of a power conversion circuit includes: reducing, in a case that the filter circuit of the inverter is an L-type filter circuit, the frequency of the alternative-current voltage of the power conversion circuit; adjusting, in a case that the filter circuit of the inverter is an LC-type filter circuit, the frequency of the alternative-current voltage of the power conversion circuit to reduce a difference between the frequency of the alternative-current voltage of the power conversion circuit and a resonant frequency of the LC-type filter circuit; and increasing, in a case that the filter circuit of the inverter is a C-type filter circuit, the frequency of the alternative-current voltage of the power conversion circuit.

In an embodiment, the adjusting an operation parameter of a temperature regulation system in an inverter cabinet includes: increasing an operation power of the temperature regulation system in the inverter cabinet.

According to the present disclosure, a control apparatus is further provided. The control apparatus includes: a processor and a memory. The memory stores a program, instructions or codes. The processor is configured, when executing the program, the instructions or the codes stored in the memory, to perform the grid-connected control method for an inverter mentioned above.

According to the present disclosure, a photovoltaic system is further provided. The photovoltaic system includes the inverter mentioned above. A direct-current side of the inverter is connected to a photovoltaic array, and an alternative-current side of the inverter is connected to a power grid.

According to the present disclosure, a computer-readable storage medium is further provided. The computer-readable storage medium stores a computer program. The computer program, when executed by a processor, causes the processor to perform the grid-connected control method for an inverter mentioned above.

With the inverter according to the embodiments of the present disclosure, when it is required to connect the inverter operating in a standby state to the power grid, the inverter is firstly controlled to operate in an off-grid state rather than directly turning on an alternative-current switch to connect the inverter to the power grid, and the off-grid operation parameter of the power conversion circuit or the operation parameter of the temperature regulation system is adjust to consume the energy of the inverter. Since the inverter is not connected to the power grid, all the energy of the inverter is obtained from the photovoltaic array connected in the direct-current side of the inverter, that is, the energy outputted by the photovoltaic array is consumed. After the energy is consumed, in a case that at least one electrical parameter of the inverter is greater than a corresponding threshold, it indicates that the energy outputted by the photovoltaic array is sufficient to support the inverter to operate in a grid-connected state, and then the inverter is controlled to operate in the grid-connected state. The electrical parameter may include: a direct-current voltage, an alternative-current voltage, an alternative-current current, a direct-current current, a direct-current side power or an alternative-current side power of the inverter. In this way, the inverter may be prevented from frequently switching between the standby state and the grid-connected state due to the low energy at the direct-current side. Therefore, with the technical solutions according to the present disclosure, power consumption can be reduced, and service lives of electrical components can be extended.

### BRIEF DESCRIPTION OF THE DRAWINGS

FIG. 1 is a schematic diagram of a photovoltaic system according to an embodiment of the present disclosure;
FIG. 2 is a schematic diagram of a photovoltaic system according to another embodiment of the present disclosure;
FIG. 3 is a schematic diagram of an inverter according to an embodiment of the present disclosure;
FIG. 4 is a flowchart of a grid-connected control method for an inverter according to an embodiment of the present disclosure;
FIG. 5 is a flowchart of a grid-connected control method for an inverter according to another embodiment of the present disclosure; and
FIG. 6 is a schematic diagram of a control apparatus according to an embodiment of the present disclosure.

### DETAILED DESCRIPTION

In order to enable those skilled in the art to better understand and implement the technical solutions according to the embodiments of the present disclosure, an application scenario of the inverter according to the embodiments of the present disclosure is described below, in which an inverter applied to a photovoltaic system is taken as an example.

The inverter according to the embodiments of the present disclosure is not limited an exemplary type and topology of the inverter. For example, the inverter may be a string inverter, a centralized inverter, or a micro inverter.

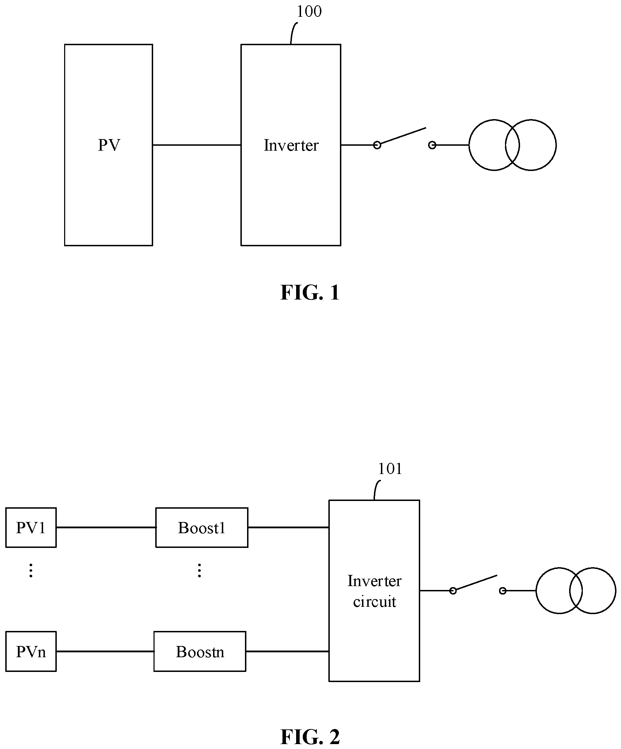

Reference is made to FIG. 1, which is a schematic diagram of a photovoltaic system according to an embodiment of the present disclosure.

The photovoltaic system shown in FIG. 1 includes a centralized inverter, that is, a direct-current side of the inverter 100 is connected to a photovoltaic array PV, and an alternating-current side of the inverter 100 is connected to a power grid through an alternating-current switch. The type of the alternating-current switch is not limited in the present disclosure. For example, the alternating-current switch may be any one of a relay, a contactor, a circuit breaker, and a semiconductor switching device. It should be understood that the alternating-current switch is generally arranged inside an inverter cabinet and is controlled by a controller of the inverter.

Reference is made to FIG. 2, which is a schematic diagram of a photovoltaic system according to another embodiment of the present disclosure.

The photovoltaic system shown in FIG. 2 includes a string inverter. In addition to an inverter circuit 101, the string inverter further includes n DC/DC (direct-current/ direct-current) circuits, where n is an integer greater than or equal to 1. The number of DC/DC circuits included in the photovoltaic system is not limited. Taking the DC/DC circuits including Boost circuits as an example, the Boost circuits include Boost1 to Boostn. Each of the BOOST circuits is connected to a corresponding PV, that is, an input terminal of Boostl is connected to PV1, and an input terminal of Boostn is connected to PVn.

To ensure that the inverter is smoothly and stably connected to the power grid when the lighting is weak, the inverter according to the embodiment of the present disclosure may firstly consume the energy at the direct-current side. If the energy at the direct-current side is sufficient for the inverter to be successfully connected to the power grid after the energy is consumed, the inverter is controlled to switch from a standby state to a grid-connected state.

In order to make the above objectives, features and advantages of the present disclosure more apparent and easier to be understood, the embodiments of the present disclosure are described in detail below in conjunction with the drawings and the embodiments.

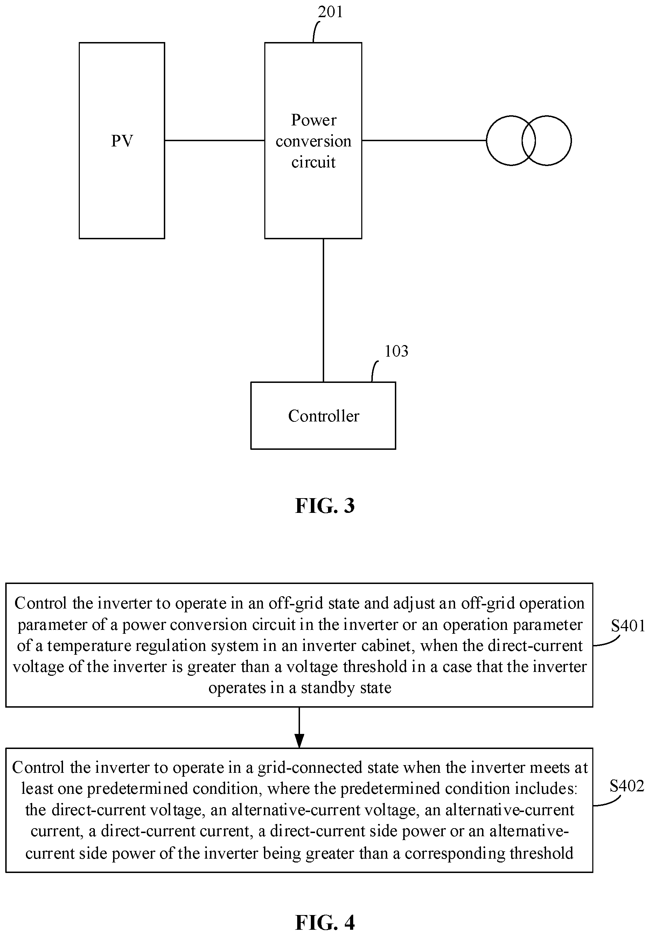

Reference is made to FIG. 3, which is a schematic diagram of an inverter according to an embodiment of the present disclosure.

The inverter according to the embodiment of the present disclosure includes: a power conversion circuit 201 and a controller 103.

The controller 103 is configured to, in a case that the inverter operates in a standby state, control the inverter to operate in an off-grid state when the power conversion circuit 201 is disconnected from the power grid and a direct-current voltage of the inverter is greater than a voltage threshold, and adjust an off-grid operation parameter of the power conversion circuit 201 in the inverter or an operation parameter of a temperature regulation system in an inverter cabinet to consume the energy of the inverter. The voltage threshold may be equal to a value of a start-up voltage of the inverter, or may be configured based on the value of the start-up voltage of the inverter.

The controller 103 is configured to, when the inverter meets at least one predetermined condition, control the inverter to operate in a grid-connected state. The predetermined condition includes: the direct-current voltage, an alternative-current voltage, an alternative-current current, a direct-current current, a direct-current side power or an alternative-current side power of the inverter being greater than a corresponding threshold.

In the embodiments of the present disclosure, it is not limited which electrical parameter of the inverter is greater than a corresponding threshold after the energy is consumed. The electrical parameter may be any one or more of the above various electrical parameters. For example, it may be that the direct-current voltage is greater than a voltage threshold, or it may be that the direct-current current is greater than a current threshold, which is not repeated herein. When any one of the above electrical parameters is greater than a corresponding threshold, it indicates that the energy of the photovoltaic array is sufficient for the inverter to operate in the grid-connected state after consuming the energy.

When the direct-current voltage of the inverter is greater than the voltage threshold (for example, a minimum voltage threshold is equal to a peak voltage at grid connection point), it indicates that the inverter meets the condition for connecting to the power grid, then the inverter switches to the off-grid operation state, and the parameter is adjusted for consuming the energy of the inverter. When the consumed energy reaches a predetermined value (for example, the predetermined value is greater than a standby power) and any one of the direct-current voltage, the alternative-current voltage, the alternative-current current, the direct-current current, the direct-current side power and the alternative-current side power is greater than a corresponding threshold, it indicates that the energy of the photovoltaic array is sufficient for the inverter to switch to the grid-connected state to operate.

It should be understood that in the embodiments of the present disclosure, the manner in which the power conversion circuit 201 operates in the grid-connected state is not limited. For example, in a manner, the controller 103 controls an alternative-current switch connected between the power conversion circuit 201 and the power grid to be closed.

It should be understood that when the inverter operates in the standby state, the direct-current voltage of the inverter may be detected periodically. For example, the direct-current voltage is detected every predetermined time period.

Whether the inverter is a string inverter or a centralized inverter is not limited in the present disclosure. It should be understood that the technical solutions according to the embodiments of the present disclosure are applicable to both types of inverter. Moreover, the controller 103 controls alternative-current switches to be turned on or turned off, and controls switching transistors in the power conversion circuit 201 to be turned on or turned off.

In the embodiments of the present disclosure, the off-grid operation parameter of the power conversion circuit 201 is not limited. For example, the off-grid operation parameter may be any one of a direct-current voltage, an amplitude of an alternative-current voltage, a frequency of an alternative-current voltage, a frequency of a switching transistor, and an operation power of the temperature regulation system. It should be understood that each of the above parameters is adjusted to adjust an output power of the photovoltaic array, that is, to increase the output power of the photovoltaic array.

For example, the temperature regulation system may include at least one of an electric fan, a water pump and a heater, to regulate the temperature inside the inverter cabinet. The temperature regulation system is controlled to operate to consume the energy of the inverter.

With the inverter according to the embodiments of the present disclosure, when it is required to connect the inverter operating in a standby state to the power grid, the inverter is firstly controlled to operate in an off-grid state rather than directly turning on an alternative-current switch to connect the inverter to the power grid, and the off-grid operation parameter of the power conversion circuit or the operation parameter of the temperature regulation system is adjust to consume the energy of the inverter. Since the inverter is not connected to the power grid, all the energy of the inverter is obtained from the photovoltaic array connected in the direct-current side of the inverter, that is, the energy outputted by the photovoltaic array is consumed. After the energy is consumed, in a case that an electrical parameter of the inverter is greater than a corresponding threshold, it indicates that the energy outputted by the photovoltaic array is sufficient to support the inverter to operate in a grid-connected state, and then the power conversion circuit starts to operate in the grid-connected state. In this way, the inverter may be prevented from frequently switching between the standby state and the grid-connected state due to weak lighting. It should be understood that after the inverter operates in the grid-connected state, it is stopped to consuming energy of the inverter, and normal operation is performed, thereby realizing grid-connected power generation.

In order to accurately determine whether the inverter may operate in the grid-connected state, it is required for the direct-current voltage to meet a condition, and it is further required for the direct-current side power to meet a predetermined condition. Specifically, the controller is configured to, in a case that the inverter operates in the off-grid state, control the inverter to operate in the grid-connected state when the direct-current voltage of the inverter is greater than the voltage threshold and the direct-current side power of the inverter is greater than a power threshold. After the inverter is disconnected from the power grid, the off-grid operation parameter of the power conversion circuit or the operation parameter of the temperature regulation system may be adjusted to consume the energy of the inverter, which may cause a decrease in the direct-current voltage of the inverter. Therefore, before the inverter is controlled to be connected to the power grid, it is required to determine whether the direct-current voltage of the inverter is still greater than the voltage threshold. Furthermore, to ensure that the inverter is to be successfully connected to the power grid without switching back and forth between the grid-connected state and the off-grid state, it is required to determine whether the direct-current side power is greater than the power threshold.

In an embodiment, in order to avoid affecting the inverter switching to the grid-connected state by fluctuations in the electrical parameter and avoid the inverter frequently switching between the grid-connected state and the off-grid state, a time threshold may be introduced for determination. For example, the controller is configured to, when the direct-current voltage of the inverter is greater than the voltage threshold and the direct-current side power of the inverter is greater than the power threshold for more than a time threshold, control the inverter to operate in the grid-connected state.

It should be understood that in a case that the energy of the photovoltaic array is insufficient for the inverter to be connected to the power grid while the inverter is being connected to the power grid, the inverter may be switched from the grid-connected state to the standby state. Specifically, the controller is further configured to, in a case that the inverter operates in the grid-connected state, control the inverter to switch to the standby state when the direct-current side power, the alternative-current side power, the direct-current voltage, the direct-current current or the alternative-current current of the inverter is less than a corresponding threshold for more than a time threshold. It should be understood that the time threshold corresponding to the inverter switching to the grid-connected state may be equal to or not equal to the time threshold corresponding to the inverter switching to the standby state, which is not limited in the embodiments of the present disclosure.

Hereinafter, different implementation manners in which the operation parameter is adjusted to consume energy are described through examples.

In a first manner, the controller adjusts the off-grid operation parameter of the power conversion circuit in the inverter by increasing a direct-current voltage of the power conversion circuit. Thus, the direct-current voltage at the input side of the inverter is increased, that is, the output voltage of the photovoltaic array is increased. It can be seen from the PV feature of the photovoltaic array that, when the output voltage of the photovoltaic array changes, the output power of the photovoltaic array changes accordingly. Therefore, the output power of the photovoltaic array may be changed by changing the direct-current voltage, and then it is determined whether the output power of the photovoltaic array is sufficient for the inverter to operate in the grid-connected state.

In a second manner, the controller adjusts the off-grid operation parameter of the power conversion circuit in the inverter by increasing an amplitude of an alternative-current voltage of the power conversion circuit. Since the inverter operates in the off-grid state, the energy of the inverter is obtained from the photovoltaic array. When increasing the amplitude of the alternative-current voltage of the inverter, it is required for the photovoltaic array to provide more energy.

In a third manner, the controller adjusts the off-grid operation parameter of the power conversion circuit in the inverter by increasing a frequency of a switching transistor of the power conversion circuit. It should be understood that a higher frequency of a switching transistor indicates a greater switching loss generated by the switching transistor, which is required for the photovoltaic array to support.

In a fourth manner, the controller adjusts the off-grid operation parameter of the power conversion circuit in the inverter by increasing an operation power of the temperature regulation system in the inverter cabinet.

In a fifth manner, the controller adjusts the off-grid operation parameter of the power conversion circuit in the inverter by adjusting a frequency of an alternative-current voltage of the power conversion circuit in a case that the inverter includes a filter circuit.

The type of the filter circuit is not limited in the present disclosure. For example, in a case that the filter circuit of the inverter is an L-type filter circuit, the frequency of the alternative-current voltage of the power conversion circuit is reduced to consume the energy of the inverter, where L represents an inductor; in a case that the filter circuit of the inverter is an LC-type filter circuit, the frequency of the alternative-current voltage of the power conversion circuit is adjusted to reduce the difference between the frequency of the alternative-current voltage of the power conversion circuit and the resonant frequency of the LC-type filter circuit, to consume the energy of the inverter, where L represents an inductor and C represents a capacitor; and in a case that the filter circuit of the inverter is a C-type filter circuit, the frequency of the alternative-current voltage of the power conversion circuit is increased.

Reduce the difference between the frequency of the alternative-current voltage of the power conversion circuit and the resonant frequency of the LC-type filter circuit is not limited to reducing the value of the difference between the frequency of the alternative-current voltage and the resonant frequency. For example, if the frequency of the alternative-current voltage is 50Hz and the resonant frequency is 500Hz or higher, the frequency of the alternative-current voltage may be increased to be close to the resonant frequency, such as adjusting the frequency of the alternative-current voltage from 50Hz to 100Hz to reduce the difference between the frequency of the alternative-current voltage and the resonant frequency.

In consuming the energy of the inverter by adjusting the frequency of the alternative-current voltage in the embodiments of the present disclosure, it is required to perform determination based on the type of the filter circuit connected to the alternative-current side of the power conversion circuit. For different types of filter circuits, the frequency of the alternative-current voltage is adjusted differently. For different types of filter circuits, the frequency of the alternative-current voltage may be increased, or may be decreased.

With the inverter according to the embodiments of the present disclosure, the inverter is controlled to operate in the off-grid state to consume energy, that is, loss is increased to increase energy consumption of the photovoltaic array. When the inverter operates in the off-grid state, the identification range of the output energy of the photovoltaic array can be enlarged, so that it can be directly determined whether the inverter may operate in the grid-connected state based on the value of the power.

Based on the inverter according to the above embodiments, a grid-connected control method for an inverter is further provided according to an embodiment of the present disclosure, which is described in detail below in conjunction with the drawings.

Reference is made to FIG. 4, which is a flowchart of a grid-connected control method for an inverter according to an embodiment of the present disclosure.

The grid-connected control method for an inverter according to the embodiment of the present disclosure includes the following steps S401 and S402.

In step S401, in a case that the inverter operates in a standby mode, an alternative-current switch connected to an alternative-current side of a power conversion circuit in the inverter is controlled to be turned off. When a direct-current voltage of the inverter is greater than a voltage threshold, the inverter is controlled to operate in an off-grid state, and an off-grid operation parameter of the power conversion circuit or an operation parameter of a temperature regulation system in an inverter cabinet is adjusted to consume the energy of the inverter.

It should be understood that when the inverter operates in the standby state, the direct-current voltage of the inverter may be detected periodically. For example, the direct-current voltage is detected every predetermined time period.

In step S402, the inverter is controlled to operate in a grid-connected state when the inverter meets at least one predetermined condition. The predetermined condition includes: a direct-current voltage, an alternative-current voltage, an alternative-current current, a direct-current current, a direct-current side power or an alternative-current side power of the inverter being greater than a corresponding threshold. That is, at least one of the above parameters of the inverter is greater than a corresponding threshold, indicating that the energy of the photovoltaic array is sufficient to for the inverter to operate in the grid-connected state.

For example, in an embodiment, the preset condition is that the direct-current voltage of the inverter is greater than the voltage threshold, and then the inverter is controlled to switch to the grid-connected state.

In the embodiments of the present disclosure, the off-grid operation parameter of the power conversion circuit is not limited. For example, the off-grid operation parameter may be any one of a direct-current voltage, an amplitude of an alternative-current voltage, a frequency of an alternative-current voltage, a frequency of a switching transistor, and an operation power of the temperature regulation system. It should be understood that each of the above parameters is adjusted to adjust an output power of the photovoltaic array, that is, to increase the output power of the photovoltaic array.

For example, the temperature regulation system may include at least one of an electric fan, a water pump and a heater, to regulate the temperature inside the inverter cabinet. The temperature regulation system is controlled to operate to consume the energy of the inverter.

With the grid-connected control method for the inverter according to the embodiments of the present disclosure, when it is required to connect the inverter operating in a standby state to the power grid, the inverter is firstly controlled to operate in an off-grid state rather than directly turning on an alternative-current switch to connect the inverter to the power grid, and the off-grid operation parameter of the power conversion circuit or the operation parameter of the temperature regulation system is adjust to consume the energy of the inverter. Since the inverter is not connected to the power grid, all the energy of the inverter is obtained from the photovoltaic array connected in the direct-current side of the inverter, that is, the energy outputted by the photovoltaic array is consumed. After the energy is consumed, in a case that an electrical parameter of the inverter is greater than a corresponding threshold, it indicates that the energy outputted by the photovoltaic array is sufficient to support the inverter to operate in a grid-connected state, and then the alternative-current switch is closed to start the inverter to operate in the grid-connected state. In this way, the inverter may be prevented from frequently switching between the standby state and the grid-connected state due to weak lighting. It should be understood that after the inverter operates in the grid-connected state, it is stopped to consuming energy of the inverter, and normal operation is performed, thereby realizing grid-connected power generation.

In order to accurately determine whether the inverter may operate in the grid-connected state, it is required for the direct-current voltage to meet a condition, and it is further required for the direct-current side power to meet a predetermined condition. The inverter is controlled to operate in the grid-connected state when the direct-current voltage of the inverter is greater than the voltage threshold by: controlling, in a case that the inverter operates in the off-grid state, the inverter to operate in the grid-connected state when the direct-current voltage of the inverter is greater than the voltage threshold and the direct-current side power of the inverter is greater than a power threshold. After the inverter is disconnected from the power grid, the off-grid operation parameter of the power conversion circuit or the operation parameter of the temperature regulation system may be adjusted to consume the energy of the inverter, which may cause a decrease in the direct-current voltage of the inverter. Therefore, before the inverter is controlled to be connected to the power grid, it is required to determine whether the direct-current voltage of the inverter is still greater than the voltage threshold. Furthermore, to ensure that the inverter is to be successfully connected to the power grid without switching back and forth between the grid-connected state and the off-grid state, it is required to determine whether the direct-current side power is greater than the power threshold.

It should be understood that in a case that the energy of the photovoltaic array is insufficient for the inverter to be connected to the power grid while the inverter is being connected to the power grid, the inverter may be switched from the grid-connected state to the standby state. Specifically, the grid-connected control method for the inverter according to the embodiment of the present disclosure further includes: controlling, in a case that the inverter operates in the grid-connected state, the inverter to operate in the standby state when the direct-current side power of the inverter is less than a power threshold for more than a time threshold.

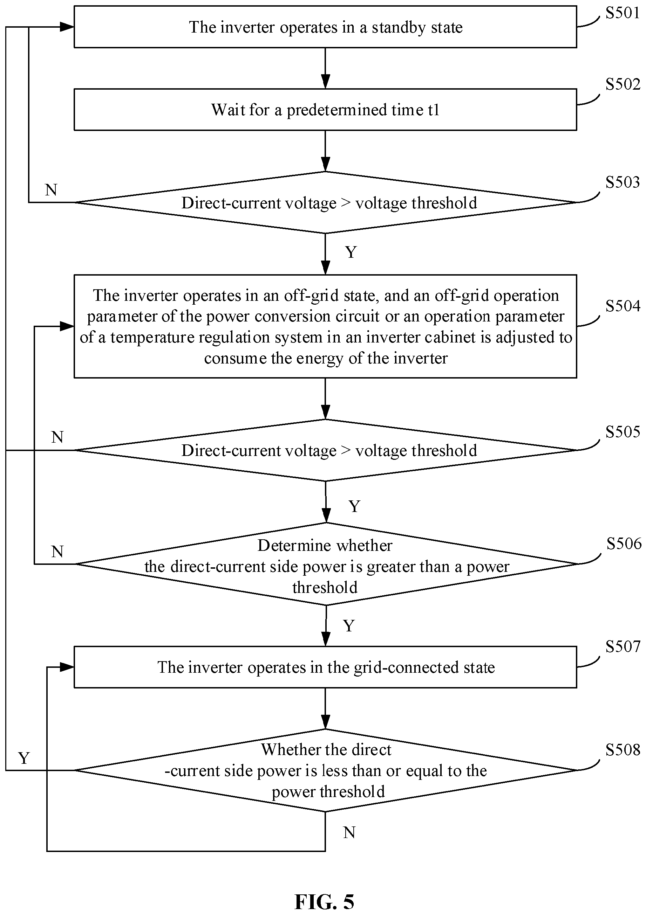

Hereinafter, a specific implementation is described. Reference is made to FIG. 5, which is a flowchart of a grid-connected control method for an inverter according to another embodiment of the present disclosure.

In step S501, the inverter operates in a standby state.

In step S502, a predetermined time t1 is waited.

In step S503, when the direct-current voltage is greater than the voltage threshold, proceed to step S504; and when the direct-current voltage is less than or equal to the voltage threshold, proceed to step S501.

In step S504, the inverter operates in an off-grid state, and an off-grid operation parameter of the power conversion circuit or an operation parameter of a temperature regulation system in an inverter cabinet is adjusted to consume the energy of the inverter.

In step S505, during the inverter operates in the off-grid state, it is determined whether the direct-current voltage is greater than the voltage threshold. In a case that the direct-current voltage is greater than the voltage threshold, proceed to step S506; and in a case that the direct-current voltage is less than or equal to the voltage threshold, proceed to step S501. In this embodiment of the present disclosure, the determination is performed based on the direct-current voltage in the electrical parameters of the inverter, and the determination may be performed based on any one of the direct-current current, the alternative-current current, the alternative-current voltage, the direct-current side power and the alternative-current side power of the inverter.

In step S506, it is determined whether the direct-current side power is greater than a power threshold. In a case that the direct-current side power is greater than the power threshold, proceed to step S507; and in a case that the direct-current side power is less than or equal to the power threshold, proceed to step S504. In this embodiment of the present disclosure, the inverter is controlled to operate in the grid-connected state when the direct-current voltage is greater than the voltage threshold and the direct-current side power is greater than the power threshold.

In step S507, the inverter operates in the grid-connected state.

In step S508, in a case that any one of the direct-current side power, the alternative-current side power, the direct-current voltage, the direct-current current and the alternative-current current is less than a corresponding threshold proceed to step S501; and in a case that all the direct-current side power, the alternative-current side power, the direct-current voltage, the direct-current current and the alternative-current current are greater than or equal to a corresponding threshold, proceed to step S507. In the embodiments of the present disclosure, it is not limited which electrical parameter of the inverter is greater than a corresponding threshold after the energy is consumed. The electrical parameter may be any one or more of the above various electrical parameters. For example, it may be that the direct-current voltage is greater than a voltage threshold, or it may be that the direct-current current is greater than a current threshold, which is not repeated herein. When any one of the above electrical parameters is greater than a corresponding threshold, it indicates that the energy of the photovoltaic array is sufficient for the inverter to operate in the grid-connected state after consuming the energy.

Hereinafter, different implementation manners in which the operation parameter is adjusted to consume energy are described through examples.

The off-grid operation parameter of the power conversion circuit is adjusted by: increasing a direct-current voltage of the power conversion circuit.

The off-grid operation parameter of the power conversion circuit is adjusted by: increasing an amplitude of an alternative-current voltage of the power conversion circuit.

The off-grid operation parameter of the power conversion circuit is adjusted by: increasing a frequency of a switching transistor of the power conversion circuit.

The off-grid operation parameter of the power conversion circuit is adjusted by: adjusting a frequency of an alternative-current voltage of the power conversion circuit to consume the energy of the inverter in a case that the inverter includes a filter circuit.

The implementation of the filter circuit is not limited in the embodiments of the present disclosure, and the filter circuit may be implemented as follows. In a case that the filter circuit of the inverter is an L-type filter circuit, the frequency of the alternative-current voltage of the power conversion circuit is reduced to consume the energy of the inverter; in a case that the filter circuit of the inverter is an LC-type filter circuit, the frequency of the alternative-current voltage of the power conversion circuit is adjusted to reduce the difference between the frequency of the alternative-current voltage of the power conversion circuit and the resonant frequency of the LC-type filter circuit, to consume the energy of the inverter; and in a case that the filter circuit of the inverter is a C-type filter circuit, the frequency of the alternative-current voltage of the power conversion circuit is increased to consume the energy of the inverter.

The operation parameter of the temperature regulation system in the inverter cabinet is adjusted by: increasing an operation power of the temperature regulation system in the inverter cabinet.

Based on the inverter and the grid-connected control method for the inverter according to the above embodiments, a photovoltaic system is further provided according to an embodiment of the present disclosure. The photovoltaic system includes the inverter described in the above embodiments. A direct-current side of the inverter is connected to a photovoltaic array, and an alternative-current side of the inverter is connected to a power grid. For details, one may refer to the architecture of the photovoltaic system shown in FIG. 1 and FIG. 2, which are not repeated here.

With the photovoltaic system according to the embodiments of the present disclosure, the inverter can stably operate in the grid-connected state without frequently switching between the standby state and the grid-connection state, ensuring the safety of the inverter and increasing grid-connected power generation efficiency.

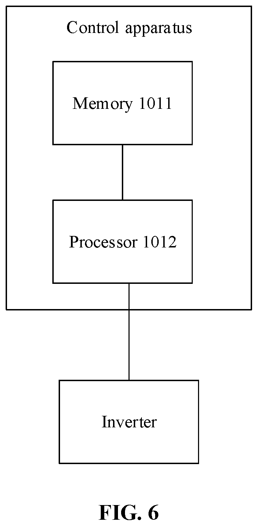

In an embodiment, reference is made to FIG. 6, which is a schematic diagram of a control apparatus according to an embodiment of the present disclosure.

The control apparatus may include a memory 1011 and a processor 1012. The processor 1012 may be connected to the power converter, and may drive switches in the inverter. As shown in FIG. 6, the memory may be a random access memory (RAM), a flash memory, a read only memory (ROM), an EPROM memory, a non-volatile read-only electronic programmable memory (EPROM), a register, a hard disk, a removable disk, and the like.

The memory 1011 may store computer instructions. The computer instructions stored in the memory 1011, when being executed by the processor 1012, cause the processor 1012 to perform the grid-connected control method for the inverter. The memory 1011 may further store data, for example, information such as the thresholds mentioned in the above embodiments.

All or part of the above embodiments may be implemented by software, hardware, firmware or any combination thereof. When implemented by using software, all or some of the functions may be implemented in a form of a computer program product. The computer program product includes one or more computer instructions. When the computer program instructions are loaded and executed on a computer, all or part of the processes or functions described in the embodiments of the present disclosure are generated. The computer may be a general-purpose computer, a special-purpose computer, a computer network, or other programmable apparatuses. The computer instructions may be stored in a computer readable storage medium or transmitted from one computer readable storage medium to another computer readable storage medium. For example, the computer instructions may be transmitted from one website, computer, server or data center to another website, computer, server or data center in a wired (for example, a coaxial cable, an optical fiber or a digital subscriber line (DSL)) or wireless (for example, infrared, wireless or microwave) manner. The computer readable storage medium may be any available medium capable of being accessed by a computer or include a data storage device integrated by one or more available media, such as a server and a data center. The available medium may be a magnetic medium (for example, a floppy disk, a hard disk, or a magnetic tape), a semiconductor medium (for example, a solid state disk (SSD)), or the like.

A readable storage medium is further provided according to an embodiment of the present disclosure for storing the method according to the above embodiments. For example, the readable storage medium may be a random access memory (RAM), a flash memory, a read only memory (ROM), an EPROM memory, a non-volatile read-only electronic programmable memory (EPROM), a register, a hard disk, a removable disk, or any other form of storage medium in the art.

It should be noted that the embodiments in the present disclosure are described in a progressive manner, and each of the embodiments focuses on its differences from the other embodiments. The same and similar parts among the embodiments may be referred to each other. Since the product disclosed in the embodiments corresponds to the method disclosed in the embodiments, the description of the method is relatively simple, and references may be made to the description of the product for relevant matters.

The disclosed embodiments are described above so that those skilled in the art can make or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. An inverter, comprising:
a power conversion circuit; and
a controller; wherein
the controller is configured to, in a case that the inverter operates in a standby state, control the inverter to operate in an off-grid state when a direct-current voltage of the inverter is greater than a voltage threshold, and adjust an off-grid operation parameter of the power conversion circuit in the inverter or an operation parameter of a temperature regulation system in an inverter cabinet; and
the controller is configured to, when the inverter meets at least one predetermined condition, control the inverter to operate in a grid-connected state; wherein the predetermined condition comprises: the direct-current voltage, an alternative-current voltage, an alternative-current current, a direct-current current, a direct-current side power or an alternative-current side power of the inverter being greater than a corresponding threshold.

2. The inverter according to claim 1, wherein the controller is configured to, in a case that the inverter operates in the off-grid state, control the inverter to operate in the grid-connected state when the direct-current voltage of the inverter is greater than the voltage threshold and the direct-current side power of the inverter is greater than a power threshold.

3. The inverter according to claim 2, wherein the controller is configured to, in the case that the inverter operates in the off-grid state, control the inverter to operate in the grid-connected state when the direct-current voltage of the inverter is greater than the voltage threshold and the direct-current side power of the inverter is greater than the power threshold for more than a time threshold.

4. The inverter according to claim 1, wherein the controller is further configured to, in a case that the inverter operates in the grid-connected state, control the inverter to operate in the standby state when the direct-current side power, the alternative-current side power, the direct-current voltage, the direct-current current or the alternative-current current of the inverter is less than a corresponding threshold for more than a time threshold.

5. The inverter according to any one of claims 1 to 4, wherein the controller is configured to adjust the off-grid operation parameter of the power conversion circuit in the inverter by:
increasing a direct-current voltage of the power conversion circuit.

6. The inverter according to any one of claims 1 to 4, wherein the controller is configured to adjust the off-grid operation parameter of the power conversion circuit in the inverter by increasing an amplitude of an alternative-current voltage of the power conversion circuit.

7. The inverter according to any one of claims 1 to 4, wherein the controller is configured to adjust the off-grid operation parameter of the power conversion circuit in the inverter by increasing a frequency of a switching transistor of the power conversion circuit.

8. The inverter according to any one of claims 1 to 4, wherein the controller is configured to adjust the off-grid operation parameter of the power conversion circuit in the inverter by increasing an operation power of the temperature regulation system in the inverter cabinet.

9. The inverter according to any one of claims 1 to 4, wherein the controller is configured to adjust the off-grid operation parameter of the power conversion circuit in the inverter by adjusting a frequency of an alternative-current voltage of the power conversion circuit in a case that the inverter comprises a filter circuit;
wherein the controller is further configured to:
in a case that the filter circuit of the inverter is an L-type filter circuit, reduce the frequency of the alternative-current voltage of the power conversion circuit;
in a case that the filter circuit of the inverter is an LC-type filter circuit, adjust the frequency of the alternative-current voltage of the power conversion circuit to reduce a difference between the frequency of the alternative-current voltage of the power conversion circuit and a resonant frequency of the LC-type filter circuit; and
in a case that the filter circuit of the inverter is a C-type filter circuit, increase the frequency of the alternative-current voltage of the power conversion circuit.

10. A grid-connected control method for an inverter, comprising:
detecting a direct-current voltage of the inverter in a case that the inverter operates in a standby state;
controlling the inverter to operate in an off-grid state, and adjusting an off-grid operation parameter of a power conversion circuit in the inverter or an operation parameter of a temperature regulation system in an inverter cabinet, when the direct-current voltage of the inverter is greater than a voltage threshold; and
controlling the inverter to operate in a grid-connected state when the inverter meets at least one predetermined condition, wherein the predetermined condition comprises: the direct-current voltage, an alternative-current voltage, an alternative-current current, a direct-current current, a direct-current side power or an alternative-current side power of the inverter being greater than a corresponding threshold.

11. The method according to claim 10, wherein the controlling the inverter to operate in a grid-connected state when the direct-current voltage of the inverter is greater than the voltage threshold comprises:
controlling, in a case that the inverter operates in the off-grid state, the inverter to operate in the grid-connected state when the direct-current voltage of the inverter is greater than the voltage threshold and the direct-current side power of the inverter is greater than a power threshold.

12. The method according to claim 10, further comprising:
controlling, in a case that the inverter operates in the grid-connected state, the inverter to operate in the standby state when the direct-current side power, the alternative-current side power, the direct-current voltage, the direct-current current or the alternative-current current of the inverter is less than a corresponding threshold for more than a time threshold.

13. The method according to any one of claims 10 to 12, wherein the adjusting an off-grid operation parameter of a power conversion circuit comprises:
increasing a direct-current voltage of the power conversion circuit.

14. The method according to any one of claims 10 to 12, wherein the adjusting an off-grid operation parameter of a power conversion circuit comprises: increasing an amplitude of an alternative-current voltage of the power conversion circuit.

15. The method according to any one of claims 10 to 12, wherein the adjusting an off-grid operation parameter of a power conversion circuit comprises: increasing a frequency of a switching transistor of the power conversion circuit.

16. The method according to any one of claims 10 to 12, wherein the adjusting an off-grid operation parameter of a power conversion circuit comprises:
adjusting a frequency of an alternative-current voltage of the power conversion circuit in a case that the inverter comprises a filter circuit;
wherein the adjusting an off-grid operation parameter of a power conversion circuit further comprises:
reducing, in a case that the filter circuit of the inverter is an L-type filter circuit, the frequency of the alternative-current voltage of the power conversion circuit;
adjusting, in a case that the filter circuit of the inverter is an LC-type filter circuit, the frequency of the alternative-current voltage of the power conversion circuit to reduce a difference between the frequency of the alternative-current voltage of the power conversion circuit and a resonant frequency of the LC-type filter circuit; and
increasing, in a case that the filter circuit of the inverter is a C-type filter circuit, the frequency of the alternative-current voltage of the power conversion circuit.

17. The method according to any one of claims 10 to 12, wherein the adjusting an operation parameter of a temperature regulation system in an inverter cabinet comprises:
increasing an operation power of the temperature regulation system in the inverter cabinet.

18. A control apparatus, comprising:
a processor; and
a memory, storing a program, instructions or codes; wherein
the processor is configured, when executing the program, the instructions or the codes stored in the memory, to:
detect a direct-current voltage of the inverter in a case that the inverter operates in a standby state;
control the inverter to operate in an off-grid state, and adjust an off-grid operation parameter of a power conversion circuit in the inverter or an operation parameter of a temperature regulation system in an inverter cabinet, when the direct-current voltage of the inverter is greater than a voltage threshold; and
control the inverter to operate in a grid-connected state when the inverter meets at least one predetermined condition, wherein the predetermined condition comprises: the direct-current voltage, an alternative-current voltage, an alternative-current current, a direct-current current, a direct-current side power or an alternative-current side power of the inverter being greater than a corresponding threshold.

19. A photovoltaic system, comprising:
the inverter according to any one of claims 1 to 9; wherein
a direct-current side of the inverter is connected to a photovoltaic array, and an alternative-current side of the inverter is connected to a power grid.

20. A computer-readable storage medium, storing a computer program, wherein the computer program, when executed by a processor, causes the processor to perform the method according to any one of claims 10 to 17.
